# EUROPEAN PATENT SPECIFICATION

(11) **EP 4 180 690 B1**
(45) Date of publication and mention of the grant of the patent: **12.02.2025**
(21) Application number: 22202482.0
(22) Date of filing: 19.10.2022
(51) Int. Cl.: F16F 9/46

(54) **VARIABLE STIFFNESS HYDRAULIC DAMPER**
HYDRAULISCHER DÄMPFER MIT VARIABLER STEIFIGKEIT
AMORTISSEUR HYDRAULIQUE À RIGIDITÉ VARIABLE

(30) Priority: 20.10.2021 CN 202111219157; 12.07.2022 US 202217863381
(43) Date of publication of application: 17.05.2023
(73) Proprietor: BeijingWest Industries Co. Ltd., 102400 Beijing (CN)
(72) Inventor: FRANCZYK, Bartlomiej, 31-066 Ul. Skawinska 18/14, Kraków, 31-066, Poland (PL); SLUSARCZYK, Pawel, 32-400 Ul. Sredniawskiego 10, Myslenice, 32-400, Poland (PL)
(74) Representative: Lukaszyk, Szymon

(56) References cited:
- WO-A1-2014/007913
- DE-A1- 102012 016 711
- JP-A- 2008 089 037
- US-A1- 2018 142 756
- US-A1- 2019 271 371

## Description

### Field of the Invention

The present invention relates to a hydraulic damper, in particular a motor vehicle suspension damper, comprising a tube filed with working liquid, a piston assembly disposed slidably within the tube along an axis, attached to a piston rod extending outside the damper through a sealed piston rod guide, defining a rebound chamber at the side of a piston rod and a compression chamber at the opposite side, and comprising compression and rebound valve assemblies to regulate the flow of the working liquid passing through the piston assembly during rebound and compression stroke of the damper in response to a velocity of the piston assembly, and a controllable solenoid valve to control the flow of the working liquid passing through the piston assembly during rebound and compression stroke of the damper in response to a control signal.

### Background of the Invention

A hydraulic damper implementing Continuously Variable Real Time Damping (CVRTD) technology comprises a controllable solenoid valve that can seamlessly control the damping force in response to the control current. Controllable damping force can provide various damper stiffness settings in a range between "comfort mode" (soft) and "sport mode" (firm).

Commonly a solenoid valve is installed as an external valve mounted to a reservoir tube and internally connected to an external damper tube or as an internal valve mounted within piston assembly. External valves are one-way valves with a simple construction, which is advantageous, but their installation requires the use of an additional tube inside the damper and an additional space outside of the damper. Internal valves do not have this drawback but are required to operate differently for the compression and for the rebound stroke of the damper which leads to constructional and control difficulties.

Document US2018142756 discloses a dual mode hydraulic damper with a piston assembly having a hollow housing including a coil and an armature, axially slidable through a plunger guide with a spring biasing the armature to a first position with fluid allowed to flow through the sleeve to bypass the first valve. The armature slides to a second position with fluid not bypassing the first valve in response to the coil being energized by an electrical cable which extends through the piston rod.

Documents DE4002883, US2018112736, and DE102012016711 also disclose hydraulic dampers with electrically controllable valve elements creating additional by-pass paths.

It has been the object of the present invention to provide a CVRTD hydraulic damper with an internal one-way solenoid valve mounted to the piston assembly, which would operate for both strokes of the damper. It has been another object of the present invention to provide a variable stiffness hydraulic damper employing commercially available one-way solenoid valves, which would be cost efficient and simple in manufacture and assembly.

### Summary of the Invention

Therefore, a damper of the kind mentioned in the outset, according to the present invention is characterized in that the piston assembly further comprises a housing with the solenoid valve disposed within said housing at a side thereof proximate to the rebound chamber; a first partition member disposed within said housing and defining a first internal chamber between the solenoid valve and said first partition member; a second partition member disposed within said housing and defining a second internal chamber between said first partition member and said second partition member; a third partition member disposed within said housing and defining a third internal chamber between said second partition member and said third partition member; a first check valve allowing the working liquid to flow through one or more first axial channels in said first partition member from said first internal chamber to said second internal chamber, while blocking fluid flow in an opposite direction; a second check valve allowing the working liquid to flow through one or more second axial channels in said second partition member from said second internal chamber to said third internal chamber, while blocking fluid flow in an opposite direction; a third check valve allowing the working liquid to flow through one or more third axial channels in said third partition member from the compression chamber to said third internal chamber, while blocking fluid flow in an opposite direction; a fourth check valve allowing the working liquid to flow through one or more fourth axial channels disposed within a wall of said housing from said first internal chamber to the compression chamber, while blocking fluid flow in an opposite direction; one or more plurality channels disposed within the wall of said housing, non-intersecting said axial channels of said fourth check valve, and joining the rebound chamber with said second internal chamber; wherein said first partition member has a first axial opening and the solenoid valve is provided with at least one inlet in fluid communication with said first axial opening, and one or more outlets in fluid communication with said first internal chamber, wherein said second partition member has a second axial opening; wherein said first axial opening and said second axial opening allow the working liquid to flow from said third internal chamber to said at least one inlet of the solenoid valve bypassing said second internal chamber.

Preferably said first check valve is disposed within said second internal chamber, and/or said second check valve is disposed within said third internal chamber, and/or said third check valve is disposed within said third internal chamber.

Preferably at least one of said check valves has a form of at least one deflectable or floating disc covering the outlets of said axial channels.

Preferably the compression valve assembly is disposed on a side of said second partition member proximate to the rebound chamber and has a form of at least one deflectable or floating disc covering the outlets of one or more fifth axial channels in said second partition member, which are located radially proximal with respect to said second axial channels of said second check valve.

Preferably the rebound valve assembly is disposed on a side of said third partition member proximate to the compression chamber and has a form of at least one deflectable or floating disc covering the outlets of one or more sixth axial channels in said third partition member, which are located radially proximal with respect to said third axial channels of said third check valve.

Preferably the disc(s) of the compression valve assembly and/or the disc(s) of the rebound valve assembly and/or the disc(s) of said at least one of said check valves are biased by a spring.

Preferably said third internal chamber is common for both compression and rebound strokes of the damper.

Preferably said housing has a form of a sleeve shaped member.

Preferably at least one of said partition members is made integrally with the housing.

Preferably said first partition member comprises an inlet tube defining said first axial opening and said second axial opening is disposed about said inlet tube.

Preferably the solenoid valve has a valve member disposed within said first internal chamber which abuts said first partition member.

Preferably the damper is a twin-tube or a mono-tube damper.

### Brief description of drawings

The invention shall be described and explained below in connection with the attached drawings in which:
Fig. 1 illustrates a fragment of a vehicle suspension comprising an embodiment of a twin-tube damper according to the present invention;
Fig. 2 is a schematic cross-sectional view of the damper shown in Fig. 1;
Fig. 3 is a schematic perspective view of a piston assembly of the damper shown in Fig. 2;
Fig. 4 is a schematic perspective and partially exploded view of the piston assembly shown in Fig. 3;
Fig. 5 is a schematic perspective and exploded view of a first and a second partition member of the piston assembly shown in Fig. 3 and Fig. 4;
Fig. 6 is a schematic perspective and exploded view of a third partition member of the piston assembly shown in Fig. 3 and Fig. 4
Fig. 7 illustrates functionality of a piston assembly of a damper according to the present invention during rebound stroke of the damper with the solenoid valve closed (top part of the drawing) and open (bottom part of the drawing); and
Fig. 8 illustrates functionality of a piston assembly of a damper according to the present invention during compression stroke of the damper with the solenoid valve closed (top part of the drawing) and open (bottom part of the drawing).

### Detailed description of preferred embodiments

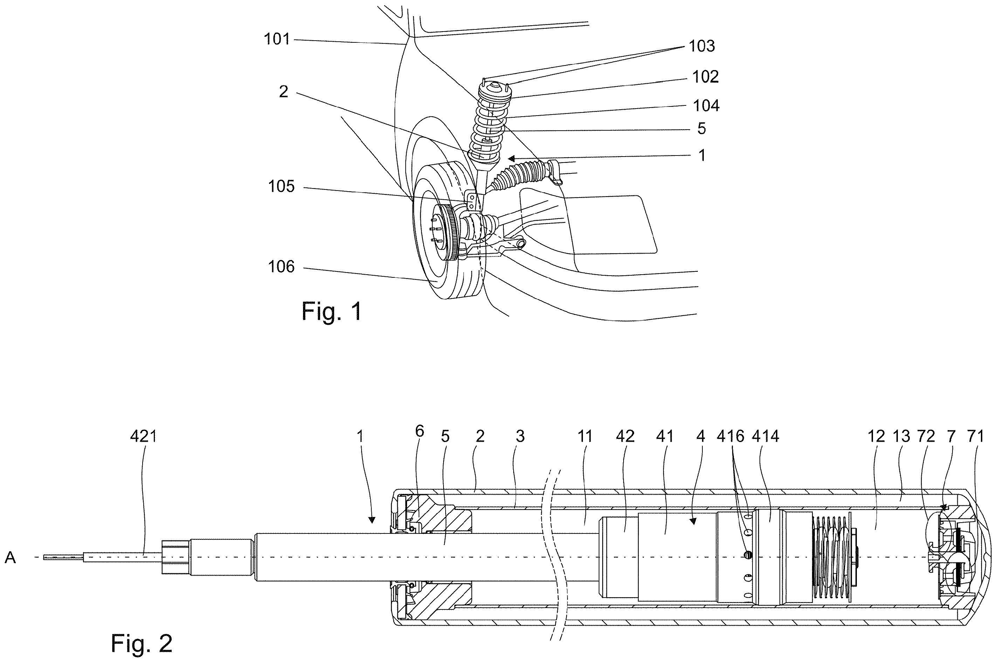

Fig. 1 schematically illustrates a fragment of an exemplary vehicle suspension comprising a damper 1 of the present invention, which in this embodiment has a twin-tube construction and is attached to a vehicle chassis 101 by means of a top mount 102 and one or more screws 103 disposed on the periphery of the upper surface of the top mount 102. The top mount 102 is connected to a coil spring 104 and a piston rod 5 of the damper 1. An external tube 2 of the damper 1 is connected to the steering knuckle 105 supporting the vehicle wheel 106.

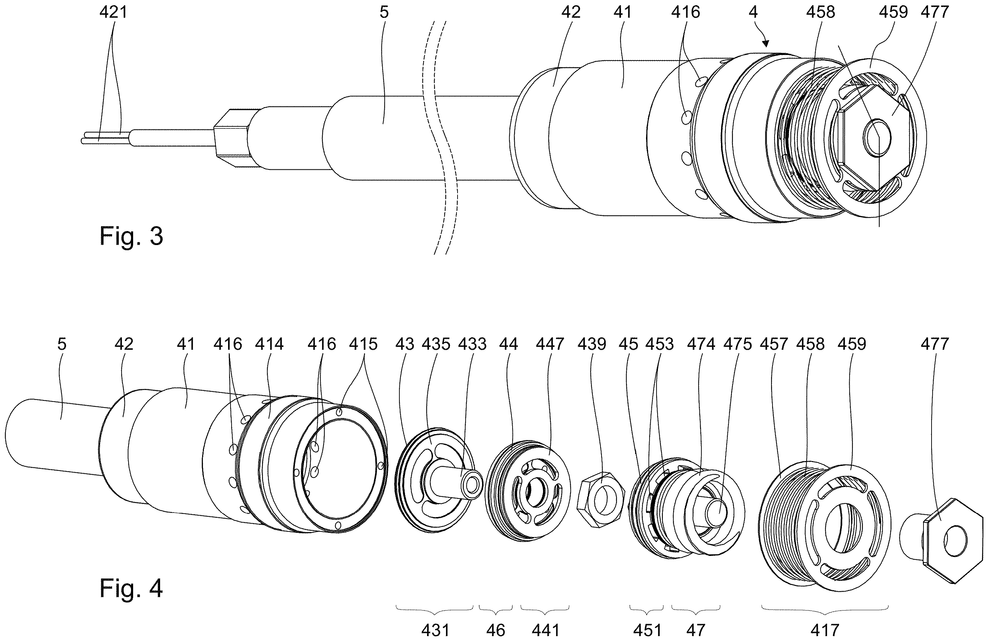

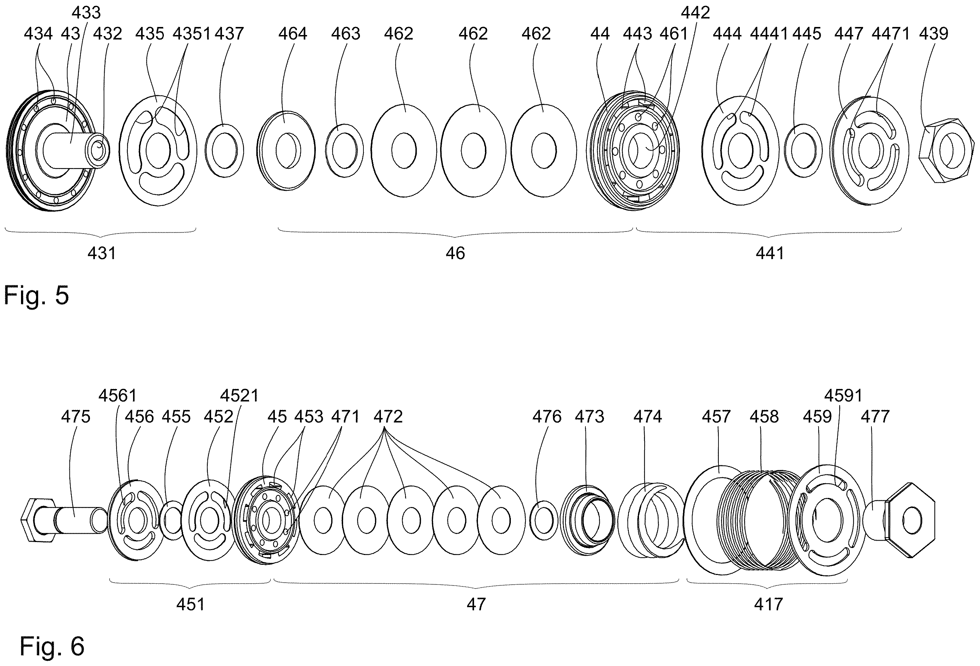

As shown in Figs. 2-8 the damper 1 comprises a tube 3 filled with viscous working liquid inside of which a movable piston assembly 4 is disposed. The piston assembly 4 is attached to the piston rod 5 extending outside the damper 1 through a sealed piston rod guide 6. The damper 1 is also provided with a base valve assembly 7 fixed at the other end of the tube 3. The piston assembly 4 makes a sliding fit with the inner surface of the tube 3 and divides the tube 3 into a rebound chamber 11 (between the piston assembly 4 and the piston rod guide 6) and a compression chamber 12 (between the piston assembly 4 and the base valve assembly 7). An additional compensation chamber 13 is located at the other side of the base valve assembly 7 between the tube 3 and the external tube 2.

The piston assembly 4 is provided with compression 46 and rebound 47 valve assemblies to control the flow of the working liquid passing between the rebound chamber 11 and the compression chamber 12 while the piston assembly 4 is in motion along an axis A. Also, the base valve assembly 7 is provided with compression 71 and rebound 72 valve assemblies to control the flow of the working liquid passing between the additional compensation chamber 13 and the compression chamber 12, respectively, during rebound and compression stroke of the damper 1. As it is well known to those skilled in the art, the valve assemblies 46, 47 and 71, 72 provide design parameters that may be used to shape desired damping characteristics of the twin-tube damper 1 in response to the velocity of the piston assembly 4.

The term "compression" as used herein with reference to particular elements of the damper refers to these elements or parts of elements that are adjacent to or face the compression chamber 12 or, in a case of the working liquid flow direction, it refers to this flow direction that takes place during the compression stroke of the damper 1. Similarly, the term "rebound" as used in this specification with reference to particular elements of the damper refers to these elements or these parts of particular elements that are adjacent to or face the rebound chamber 11 or, in a case of the working liquid flow direction, it refers to this flow direction that takes place during the rebound stroke of the damper 1.

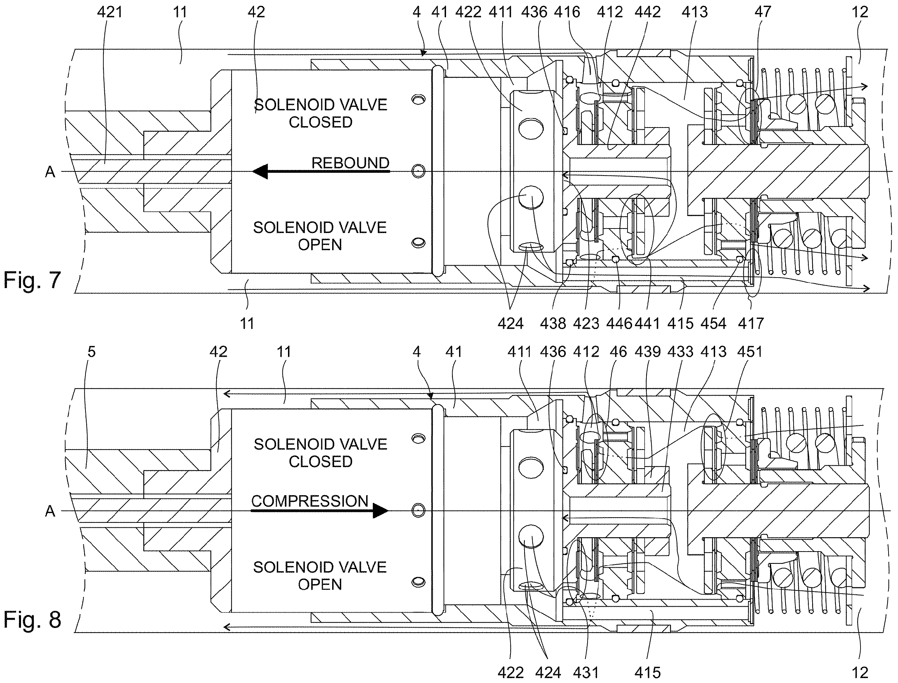

The piston assembly 4 comprises a housing 41 in a form of a sleeve shaped member provided with Teflon annular sealing 414 for sealing the piston assembly 4 with the tube 3. A first partition member 43 is inserted from the rebound end of the housing 41 and rests on its annular retaining surface. A cylindrical one-way solenoid valve 42 is screwed into the housing sleeve 41 from the rebound end thereof. The solenoid valve 42 is provided at the compression end thereof with a cylindrical valve member 422 (cf. Fig. 7, 8) having at this axial position diameter lower that the internal diameter of the housing 41 and provided with an axial inlet 423 and one or more radial, equiangularly spaced, outlets 424. In this embodiment the solenoid valve 42 is the active damping valve produced by KENDRION (NL). The valve member 422 of the solenoid valve 42 abuts the first partition member 43 and fixes its position. The solenoid valve 42 is in turn screwed into the piston rod 5 and controllable by an electric control cable 421 passing through the piston rod 5 and extending outside of the damper 1.

The first partition member 43 defines a first internal chamber 411 between the solenoid valve 42 and the first partition member 43 and has a first axial opening 432 in fluid communication with the inlet 423 of the solenoid valve 42. An annular seal 436 between the valve member 422 and the first partition member 43 seals the fluid connection of the inlet 423 with the first axial opening 432. The first internal chamber 411 surrounds the outlets 424 of the valve member 422 of the solenoid valve 42.

A second partition member 44 is disposed within the housing 41 and defines a second internal chamber 412 between the first partition member 43 and the second partition member 44. The second partition member 44 has a second axial opening 442 that along with the first axial opening 432 allow the working liquid to flow from the third internal chamber 413 to the inlet 423 of the solenoid valve 42. In this embodiment, the first partition member 43 has an inlet tube 433 and the second partition member 44 is disposed about the inlet tube 433. Twelve equiangularly spaced radial channels 416 disposed within the wall of the housing 41 join the rebound chamber 11 with the second internal chamber 412.

A third partition member 45 is disposed within the housing 41 and defines a third internal chamber 413 between the second partition member 44 and the third partition member 45.

A first check valve 431 allows the working liquid to flow from the first internal chamber 411 to the second internal chamber 412, while blocking fluid flow in an opposite direction. In this embodiment the first check valve 431 has a form of a deflectable disc 435 covering twelve equiangularly disposed first axial channels 434 in the first partition member 43 at the side of the second internal chamber 412. The deflectable disc 435 is provided with three kidney shaped openings 4351 over its circumference to decrease its stiffness.

A second check valve 441 allows the working liquid to flow from the second internal chamber 412 to the third internal chamber 413, while blocking fluid flow in an opposite direction. In this embodiment the second check valve 441 has a form of a deflectable disc 444 covering eight (8) second axial channels 443 in the second partition member 44 located radially distal at the side of the third internal chamber 413.

A third check valve 451 allows the working liquid to flow from the compression chamber 12 to the third internal chamber 413, while blocking fluid flow in an opposite direction. In this embodiment the third check valve 451 has a form of a deflectable disc 452 covering eight (8) third axial channels 453 in the third partition member 45 located radially distal at the side of the third internal chamber 413.

In this embodiment the compression valve assembly 46 of the piston assembly 4 is disposed in the second internal chamber 412, on the rebound side of the second partition member 44, and has a form of three deflectable discs 462 adjoining each other and covering eight (8) fifth axial channels 461 in the second partition member 44 located radially proximal. A distancing disc 463 adjoins the innermost deflectable disc 462 and a retaining disc 464 adjoins the distancing disc 463 defining maximum deflection of the stack of discs 462.

The deflectable disc 435 of the first check valve 431, a distancing disc 437, the retaining disc 464, the distancing disc 463, the discs 462 of the compression valve assembly 46, the second partition member 44, the deflectable disc 444 of the second check valve 441, a distancing disc 445, and a retaining disc 447 are disposed in this order over the inlet tube 433 of the first partition member 43 and secured with a securing nut 439 screwed on an external thread provided at the end of the inlet tube 433. The deflectable disc 444 and the retaining disc 447 are provided respectively with kidney shaped openings 4441 and 4471 over its circumference, allowing the working liquid to flow from the third internal chamber 413 to the fifth axial channels 461 of the compression valve assembly 46.

In this embodiment the rebound valve assembly 47 of the piston assembly 4 is disposed in the compression chamber 12, on the compression side of the third partition member 45, and has a form of five deflectable discs 472 adjoining each other and covering eight (8) sixth axial channels 471 in the third partition member 45 located radially proximal. The stack of discs 472 is additionally biased by a coil spring 474 disposed between a spring seat 473 and a retaining disc 459. The deflectable disc 452 of the third check valve 451 and the retaining disc 456 are provided respectively with kidney shaped openings 4521 and 4561 over its circumference, allowing the working liquid to flow from the third internal chamber 413 to the sixth axial channels 471 of the rebound valve assembly 47.

A fourth check valve 417 allows the working liquid to flow from the first internal chamber 411 to the compression chamber 12, while blocking fluid flow in an opposite direction. In this embodiment the fourth check valve 417 has a form of a floating disc 457 covering the outlets of four (4) fourth axial channels 415 disposed equiangularly within the wall of the housing 41, non-intersecting with the radial channels 416, and joining the compression chamber 12 with the first internal chamber 411. The floating disc 457 is biased by a coil spring 458 disposed between the floating disc 457 and the retaining disc 459. The retaining disc 459 is provided with four kidney shaped openings 4591 over its circumference, allowing the working liquid to flow therebetween.

The retaining disc 456, a distancing disc 455, the deflectable disc 452, the third partition member 45, deflectable discs 472, a washer 476, the spring seat 473, the spring 474, the floating disc 457, the spring 458, and the retaining disc 459 are disposed in this order over a fixing bolt 475 passing through the third partition member 45 and secured with a securing nut 477 screwed on an external thread provided at the end of the fixing bolt 475. The third partition member 45 assembled in this way is screwed in the housing 41 provided with an internal thread at the compression end thereof.

The first 43, second 44 and third 45 partition members are sealed with the internal wall of the housing 41 respectively by means of O-ring seals 438, 446, and 454.

The functionality of a piston assembly according to the present invention shall be explained with reference to Fig. 7 and Fig. 8.

As shown in top part of Fig. 7, during the rebound stoke of the damper 1, and when the solenoid valve 42 is closed, the working liquid flows from the rebound chamber 11 to the second internal chamber 412 through the radial channels 416, then to the third internal chamber 413 through the second check valve 441, and finally through the rebound valve assembly 47 to the compression chamber 12.

As shown in bottom part of Fig. 7, during the rebound stoke of the damper 1, and when the solenoid valve 42 is at least partially open, the working liquid flows not only as shown in the top part of Fig. 7 but also through an additional flow channel. This additional flow channel begins in the third internal chamber 413 and follows through the second axial opening 442 in the second partition member 44 and the first axial opening 432 in the first partition member 43 to the inlet 423 of the solenoid valve 42. From outlets 424 of the solenoid valve 42 the working liquid flows to the first internal chamber 411, from which it flows out of the housing 41 to the compression chamber 12 through fourth axial channels 415 and the fourth check valve 417. Therefore flow restrictions generated by the piston assembly can be decreased in dependence of the opening level of the solenoid valve 42.

As shown in top part of Fig. 8, during the compression stroke of the damper 1, and when the solenoid valve 42 is closed, the working liquid flows from the compression chamber 12 to the third internal chamber 413 through the third check valve 451, then to the second internal chamber 412 through the compression valve assembly 46, and finally through the radial channels 416 to the rebound chamber 11.

As shown in the bottom part of Fig. 8, during the compression stroke of the damper 1, and when the solenoid valve 42 is at least partially open, the working liquid flows not only as shown in the top part of Fig. 8 but also through an additional flow channel. This additional flow channel also begins in the third internal chamber 413 and follows through the second axial opening 442 in the second partition member 44 and the first axial opening 432 in the first partition member 43 to the inlet 423 of the solenoid valve 42. From outlets 424 of the solenoid valve 42, the working liquid flows to the first internal chamber 411. From the first internal chamber 411, the working liquid flows to the second internal chamber 412 through the first check valve 431, and finally through the radial channels 416 to the rebound chamber 11.

The above embodiment of the present invention is merely exemplary. The figures are not necessarily to scale, and some features may be exaggerated or minimized. These and other factors however should not be considered as limiting the invention, the intended scope of protection of which is indicated in appended claims.

List of reference numerals
1. damper
   11. rebound chamber
   12. compression chamber
   13. compensation chamber
2. external tube
3. tube
4. piston assembly
   41. housing
      411. first internal chamber
      412. second internal chamber
      413. third internal chamber
      414. annular sealing
      415. fourth axial channels
      416. radial channel
      417. fourth check valve
   42. solenoid valve
      421. electric control cable
      422. valve member
      423. inlet
      424. outlet
   43. first partition member
      431. first check valve
      432. first axial opening
      433. inlet tube
      434. first axial channels
      435. deflectable disc
         4351. kidney shaped opening
      436. annular seal
      437. distancing disc
      438. O-ring seal
      439. securing nut
   44. second partition member
      441. second check valve
      442. second axial opening
      443. second axial channels
      444. deflectable disc
         4441. kidney shaped opening
      445. distancing disc
      446. O-ring seal
      447. retaining disc
         4471. kidney shaped opening
   45. third partition member
      451. third check valve
      452. deflectable disc
         4521. kidney shaped opening
      453. third axial channels
      454. O-ring seal
      455. distancing disc
      456. retaining disc
         4561. kidney shaped opening
      457. floating disc
      458. spring
      459. retaining disc
         4591. kidney shaped opening
   46. compression valve assembly
      461. fifth axial channels
      462. deflectable disc
      463. distancing disc
      464. retaining disc
   47. rebound valve assembly
      471. sixth axial channels
      472. floating disc
      473. spring seat
      474. spring
      475. fixing bolt
      476. washer
      477. securing nut
5. piston rod
6. piston rod guide
7. base valve assembly
   71. compression valve assembly
   72. rebound valve assembly
101. vehicle chassis
102. top mount
103. screw
104. spring
105. steering knuckle
106. vehicle wheel

## Claims

1. A hydraulic damper (1), comprising:
a tube (3) filed with working liquid;
a piston assembly (4) disposed slidably within the tube (3) along an axis (A), attached to a piston rod (5) extending outside the hydraulic damper (1) through a sealed piston rod guide (6), defining a rebound chamber (11) adjacent the piston rod (5) and a compression chamber (12) at the opposite side, and including a compression valve assembly (46) and a rebound valve assembly (47) to regulate a flow of the working liquid through the piston assembly (4) during rebound and compression strokes of the hydraulic damper (1) in response to a velocity of the piston assembly (4); and
a controllable solenoid valve (42) configured to control the flow of the working liquid passing through the piston assembly (4) during the rebound and compression strokes of the hydraulic damper (1) in response to a control signal,
wherein the piston assembly (4) further comprises:
a housing (41) with the controllable solenoid valve (42) disposed within said housing (41) at a side thereof proximate to the rebound chamber (11);
a first partition member (43) disposed within said housing (41) and defining a first internal chamber (411) between the controllable solenoid valve (42) and said first partition member (43);
a second partition member (44) disposed within said housing (41) and defining a second internal chamber (412) between said first partition member (43) and said second partition member (44);
a third partition member (45) disposed within said housing (41) and defining a third internal chamber (413) between said second partition member (44) and said third partition member (45);
a first check valve (431) allowing the working liquid to flow through one or more first axial channels (434) in said first partition member (43) from said first internal chamber (411) to said second internal chamber (412), while blocking fluid flow in an opposite direction;
a second check valve (441) allowing the working liquid to flow through one or more second axial channels (443) in said second partition member (44) from said second internal chamber (412) to said third internal chamber (413), while blocking fluid flow in an opposite direction;
a third check valve (451) allowing the working liquid to flow through one or more third axial channels (453) in said third partition member (45) from the compression chamber (12) to said third internal chamber (413), while blocking fluid flow in an opposite direction;
a fourth check valve (417) allowing the working liquid to flow through one or more fourth axial channels (415) disposed within a wall of said housing (41) from said first internal chamber (411) to the compression chamber (12), while blocking fluid flow in an opposite direction; and
one or more radial channels (416) disposed within the wall of said housing (41), non-intersecting said fourth axial channels (415) of said fourth check valve (417), and joining the rebound chamber (11) with said second internal chamber (412),
wherein said first partition member (43) has a first axial opening (432) and the controllable solenoid valve (42) is provided with at least one inlet (423) in fluid communication with said first axial opening (432), and one or more outlets (424) in fluid communication with said first internal chamber (411), and
wherein said second partition member (44) has a second axial opening (442);
wherein said first axial opening (432) and said second axial opening (442) allow the working liquid to flow from said third internal chamber (413) to said at least one inlet (423) of the solenoid valve (42) bypassing said second internal chamber (412).

2. The hydraulic damper (1) according to Claim 1, wherein said first check valve (431) is disposed within said second internal chamber (412), and/or
said second check valve (441) is disposed within said third internal chamber (413), and/or
said third check valve (451) is disposed within said third internal chamber (413).

3. The hydraulic damper (1) according to Claim 1 or 2, wherein at least one of said first check valve (431), said second check valve (441), said third check valve (451) and said fourth check valve (417) has a form of at least one deflectable or floating disc (435, 444, 452, 457) covering the outlets of said axial channels (434, 443, 453, 415).

4. The hydraulic damper (1) according to any one of Claims 1 to 3, wherein the compression valve assembly (46) is disposed on a side of said second partition member (44) proximate to the rebound chamber (11) and has a form of at least one deflectable or floating disc (462) covering outlets of one or more fifth axial channels (461) in said second partition member (44), which are located radially proximal with respect to said second axial channels (443) of said second check valve (441).

5. The hydraulic damper (1) according to any one of Claims 1 to 4, wherein the rebound valve assembly (47) is disposed on a side of said third partition member (45) proximate to the compression chamber (12) and has a form of at least one deflectable or floating disc (472) covering outlets of one or more sixth axial channels (471) in said third partition member (45), which are located radially proximal with respect to said third axial channels (453) of said third check valve (451).

6. The hydraulic damper (1) according to any one of Claims 3 to 5, wherein the disc(s) of the compression valve assembly (46) and/or the disc(s) (472) of the rebound valve assembly (47) and/or the disc(s) (457) of said at least one of said check valves (417) are biased by a spring (474, 458).

7. The hydraulic damper (1) according to any one of Claims 1 to 6, wherein said third internal chamber (413) is common for both compression and rebound strokes of the hydraulic damper (1).

8. The hydraulic damper (1) according to any one of Claims 1 to 7, wherein said housing (41) has a form of a sleeve shaped member.

9. The hydraulic damper (1) according to any one of Claims 1 to 8, wherein at least one of said first partition member (43), said second partition member (44) and said third partition member (45) is made integrally with the housing (41).

10. The hydraulic damper (1) according to any one of Claims 1 to 9, wherein said first partition member (43) comprises an inlet tube (433) defining said first axial opening (432) and said second axial opening (442) is disposed about said inlet tube (433).

11. The hydraulic damper (1) according to any one of Claims 1 to 10, wherein the controllable solenoid valve (42) has a valve member (422) disposed within said first internal chamber (411) which abuts said first partition member (43).

12. The hydraulic damper (1) according to any one of Claims 1 to 11, wherein the hydraulic damper (1) is a twin-tube or a mono-tube damper.

13. The hydraulic damper (1) according to any one of Claims 1 to 12, wherein the hydraulic damper (1) is a motor vehicle suspension damper.

## Patentansprüche

1. Ein hydraulischer Dämpfer (1), bestehend aus:
einem Rohr (3), das mit Arbeitsflüssigkeit gefüllt ist;
einer Kolbenbaugruppe (4), die innerhalb des Rohrs (3) entlang einer Achse (A) verschiebbar angeordnet ist, an einer Kolbenstange (5) befestigt ist, die sich durch eine abgedichtete Kolbenstangenführung (6) aus dem hydraulischen Dämpfer (1) heraus erstreckt, eine Rückprallkammer (11) neben der Kolbenstange (5) und eine Druckkammer (12) auf der gegenüberliegenden Seite definiert, und mit einer Druckventilbaugruppe (46) und einer Zugventilbaugruppe (47) zum Regulieren eines Flusses der Arbeitsflüssigkeit durch die Kolbenbaugruppe (4) während der Zug- und Verdichtungstakte des hydraulischen Dämpfers (1) in Abhängigkeit von einer Geschwindigkeit der Kolbenbaugruppe (4); und
einem steuerbaren Magnetventil (42), das so konfiguriert ist, dass es den Fluss der Arbeitsflüssigkeit, die durch die Kolbenbaugruppe (4) fließt, während des Zug- und Verdichtungstaktes des hydraulischen Dämpfers (1) in Reaktion auf ein Steuersignal steuert,
wobei die Kolbenbaugruppe (4) ferner umfasst:
ein Gehäuse (41) mit dem steuerbaren Magnetventil (42), das innerhalb des Gehäuses (41) an einer Seite in der Nähe der Rückprallkammer (11) angeordnet ist;
ein erstes Trennelement (43), das innerhalb des Gehäuses (41) angeordnet ist und eine erste innere Kammer (411) zwischen dem steuerbaren Magnetventil (42) und dem ersten Trennelement (43) definiert;
ein zweites Trennelement (44), das innerhalb des Gehäuses (41) angeordnet ist und eine zweite innere Kammer (412) zwischen dem ersten Trennelement (43) und dem zweiten Trennelement (44) definiert;
ein drittes Trennelement (45), das innerhalb des Gehäuses (41) angeordnet ist und eine dritte innere Kammer (413) zwischen dem zweiten Trennelement (44) und dem dritten Trennelement (45) definiert;
ein erstes Rückschlagventil (431), das es der Arbeitsflüssigkeit ermöglicht, durch einen oder mehrere erste axiale Kanäle (434) in dem ersten Trennelement (43) von der ersten inneren Kammer (411) zu der zweiten inneren Kammer (412) zu fließen, während es den Flüssigkeitsstrom in einer entgegengesetzten Richtung blockiert;
ein zweites Rückschlagventil (441), das es der Arbeitsflüssigkeit ermöglicht, durch einen oder mehrere zweite axiale Kanäle (443) in dem zweiten Trennelement (44) von der zweiten inneren Kammer (412) zu der dritten inneren Kammer (413) zu fließen, während es den Flüssigkeitsstrom in einer entgegengesetzten Richtung blockiert;
ein drittes Rückschlagventil (451), das es der Arbeitsflüssigkeit ermöglicht, durch einen oder mehrere dritte axiale Kanäle (453) in dem dritten Trennelement (45) von der Druckkammer (12) zu der dritten inneren Kammer (413) zu fließen, während es den Flüssigkeitsstrom in einer entgegengesetzten Richtung blockiert;
ein viertes Rückschlagventil (417), das es der Arbeitsflüssigkeit ermöglicht, durch einen oder mehrere vierte axiale Kanäle (415), die in einer Wand des Gehäuses (41) angeordnet sind, von der ersten inneren Kammer (411) zur Druckkammer (12) zu fließen, während es den Flüssigkeitsstrom in einer entgegengesetzten Richtung blockiert; und
einen oder mehrere radiale Kanäle (416), die in der Wand des Gehäuses (41) angeordnet sind, die vierten axialen Kanäle (415) des vierten Rückschlagventils (417) nicht schneiden und die Rückprallkammer (11) mit der zweiten inneren Kammer (412) verbinden,
wobei das erste Trennelement (43) eine erste axiale Öffnung (432) aufweist und das steuerbare Magnetventil (42) mit mindestens einem Einlass (423) in Flüssigkeitsverbindung mit der ersten axialen Öffnung (432) und einem oder mehreren Auslässen (424) in Flüssigkeitsverbindung mit der ersten inneren Kammer (411) versehen ist, und
wobei das zweite Trennelement (44) eine zweite axiale Öffnung (442) aufweist; wobei die erste axiale Öffnung (432) und die zweite axiale Öffnung (442) es der Arbeitsflüssigkeit ermöglichen, von der dritten inneren Kammer (413) zu dem mindestens einen Einlass (423) des Magnetventils (42) unter Umgehung der zweiten inneren Kammer (412) zu fließen.

2. Der hydraulische Dämpfer (1) nach Anspruch 1, wobei das erste Rückschlagventil (431) innerhalb der zweiten inneren Kammer (412) angeordnet ist, und/oder
das zweite Rückschlagventil (441) in der dritten inneren Kammer (413) angeordnet ist, und/oder
das dritte Rückschlagventil (451) innerhalb der dritten inneren Kammer (413) angeordnet ist.

3. Der hydraulische Dämpfer (1) nach Anspruch 1 oder 2, wobei mindestens eines des ersten Rückschlagventils (431), des zweiten Rückschlagventils (441), des dritten Rückschlagventils (451) und des vierten Rückschlagventils (417) die Form von mindestens einer auslenkbaren oder schwimmenden Scheibe (435, 444, 452, 457) hat, die die Ausgänge der axialen Kanäle (434, 443, 453, 415) abdeckt.

4. Der hydraulische Dämpfer (1) nach einem der Ansprüche 1 bis 3, wobei die Druckventilbaugruppe (46) auf einer Seite des zweiten Trennelements (44) in der Nähe der Rückprallkammer (11) angeordnet ist und die Form mindestens einer biegsamen oder schwimmenden Scheibe (462) hat, die die Auslässe eines oder mehrerer fünfter axialer Kanäle (461) in dem zweiten Trennelement (44) abdeckt, die radial proximal in Bezug auf die zweiten axialen Kanäle (443) des zweiten Rückschlagventils (441) angeordnet sind.

5. Der hydraulische Dämpfer (1) nach einem der Ansprüche 1 bis 4, wobei die Zugventilbaugruppe (47) auf einer Seite des dritten Trennelements (45) in der Nähe der Druckkammer (12) angeordnet ist und die Form mindestens einer biegsamen oder schwimmenden Scheibe (472) hat, die die Ausgänge eines oder mehrerer sechster axialer Kanäle (471) in dem dritten Trennelement (45) abdeckt, die radial proximal in Bezug auf die dritten axialen Kanäle (453) des dritten Rückschlagventils (451) angeordnet sind.

6. Der hydraulische Dämpfer (1) nach einem der Ansprüche 3 bis 5, wobei die Scheibe(n) der Druckventilbaugruppe (46) und/oder die Scheibe(n) (472) der Zugventilbaugruppe (47) und/oder die Scheibe(n) (457) des mindestens einen Rückschlagventils (417) durch eine Feder (474, 458) vorgespannt sind.

7. Der hydraulische Dämpfer (1) nach einem der Ansprüche 1 bis 6, wobei die dritte innere Kammer (413) sowohl für den Zug- als auch für den Verdichtungstakt des hydraulischen Dämpfers (1) gemeinsam ist.

8. Der hydraulische Dämpfer (1) nach einem der Ansprüche 1 bis 7, wobei das Gehäuse (41) die Form eines hülsenförmigen Elements hat.

9. Der hydraulische Dämpfer (1) nach einem der Ansprüche 1 bis 8, wobei mindestens eines von dem ersten Trennelement (43), dem zweiten Trennelement (44) und dem dritten Trennelement (45) einstückig mit dem Gehäuse (41) ausgebildet ist.

10. Der hydraulische Dämpfer (1) nach einem der Ansprüche 1 bis 9, wobei das erste Trennelement (43) ein Einlassrohr (433) umfasst, das die erste axiale Öffnung (432) definiert, und die zweite axiale Öffnung (442) um das Einlassrohr (433) angeordnet ist.

11. Der hydraulische Dämpfer (1) nach einem der Ansprüche 1 bis 10, wobei das steuerbare Magnetventil (42) ein Ventilelement (422) aufweist, das innerhalb der ersten inneren Kammer (411) angeordnet ist und an das erste Trennelement (43) anstößt.

12. Der hydraulische Dämpfer (1) nach einem der Ansprüche 1 bis 11, wobei der hydraulische Dämpfer (1) ein Zweirohr- oder ein Einrohrdämpfer ist.

13. Der hydraulische Dämpfer (1) nach einem der Ansprüche 1 bis 12, wobei der hydraulische Dämpfer (1) ein Aufhängungsdämpfer für Kraftfahrzeuge ist.

## Revendications

1. Un amortisseur hydraulique (1), comprenant:
un tube (3) rempli de liquide de travail;
un ensemble piston (4) disposé de manière coulissante à l'intérieur du tube (3) le long d'un axe (A), fixé à une tige de piston (5) s'étendant à l'extérieur de l'amortisseur hydraulique (1) à travers un guide de tige de piston étanche (6), définissant une chambre de détente (11) adjacente à la tige de piston (5) et une chambre de compression (12) sur le côté opposé, et comprenant un ensemble soupape de compression (46) et un ensemble soupape de détente (47) pour réguler le débit du liquide de travail à travers l'ensemble piston (4) pendant les courses de détente et de compression de l'amortisseur hydraulique (1) en réponse à une vitesse de l'ensemble piston (4); et
une électrovanne contrôlable (42) configurée pour contrôler le débit du liquide de travail traversant l'ensemble piston (4) pendant les courses de détente et de compression de l'amortisseur hydraulique (1) en réponse à un signal de commande,
dans lequel l'ensemble piston (4) comprend en outre:
un boîtier (41) avec l'électrovanne contrôlable (42) disposée à l'intérieur dudit boîtier (41) sur un côté de celui-ci proche de la chambre de détente (11);
un premier élément de séparation (43) disposé à l'intérieur dudit boîtier (41) et définissant une première chambre interne (411) entre l'électrovanne contrôlable (42) et ledit premier élément de séparation (43);
un deuxième élément de séparation (44) disposé à l'intérieur dudit boîtier (41) et définissant une deuxième chambre interne (412) entre ledit premier élément de séparation (43) et ledit deuxième élément de séparation (44);
un troisième élément de partition (45) disposé à l'intérieur dudit boîtier (41) et définissant une troisième chambre interne (413) entre ledit deuxième élément de séparation (44) et ledit troisième élément de séparation (45);
un premier clapet antiretour (431) permettant au liquide de travail de s'écouler à travers un ou plusieurs premiers canaux axiaux (434) dans ledit premier élément de séparation (43) depuis ladite première chambre interne (411) jusqu'à ladite deuxième chambre interne (412), tout en bloquant l'écoulement du fluide dans une direction opposée;
un deuxième clapet antiretour (441) permettant au liquide de travail de s'écouler à travers un ou plusieurs deuxièmes canaux axiaux (443) dans ledit deuxième élément de séparation (44) depuis ladite deuxième chambre interne (412) jusqu'à ladite troisième chambre interne (413), tout en bloquant l'écoulement du fluide dans une direction opposée;
un troisième clapet antiretour (451) permettant au liquide de travail de s'écouler à travers un ou plusieurs troisièmes canaux axiaux (453) dans ledit troisième élément de séparation (45) depuis la chambre de compression (12) jusqu'à ladite troisième chambre interne (413), tout en bloquant l'écoulement du fluide dans une direction opposée;
un quatrième clapet antiretour (417) permettant au liquide de travail de s'écouler à travers un ou plusieurs quatrièmes canaux axiaux (415) disposés à l'intérieur d'une paroi dudit boîtier (41) depuis ladite première chambre interne (411) jusqu'à la chambre de compression (12), tout en bloquant l'écoulement du fluide dans une direction opposée; et
un ou plusieurs canaux radiaux (416) disposés à l'intérieur de la paroi dudit boîtier (41), n'intersectant pas lesdits quatrièmes canaux axiaux (415) dudit quatrième clapet antiretour (417), et reliant la chambre de détente (11) à ladite deuxième chambre interne (412),
dans lequel ledit premier élément de séparation (43) présente une première ouverture axiale (432) et l'électrovanne contrôlable (42) est dotée d'au moins une entrée (423) en communication fluidique avec ladite première ouverture axiale (432), et d'une ou plusieurs sorties (424) en communication fluidique avec ladite première chambre interne (411), et
dans lequel ledit deuxième élément de séparation (44) présente une deuxième ouverture axiale (442) ; dans laquelle ladite première ouverture axiale (432) et ladite deuxième ouverture axiale (442) permettent au liquide de travail de s'écouler de ladite troisième chambre interne (413) vers ladite au moins une entrée (423) de l'électrovanne (42) en contournant ladite deuxième chambre interne (412).

2. L'amortisseur hydraulique (1) selon la revendication 1, dans lequel ledit premier clapet antiretour (431) est disposé dans ladite deuxième chambre interne (412), et/ou
ledit deuxième clapet antiretour (441) est disposé dans ladite troisième chambre interne (413), et/ou
ledit troisième clapet antiretour (451) est disposé dans ladite troisième chambre interne (413).

3. L'amortisseur hydraulique (1) selon la revendication 1 ou 2, dans lequel au moins l'un des premiers clapets antiretour (431), des deuxièmes clapets antiretour (441), des troisièmes clapets antiretour (451) et des quatrièmes clapets antiretour (417) se présente sous la forme d'au moins un disque déflecteur ou flottant (435, 444, 452, 457) recouvrant les sorties desdits canaux axiaux (434, 443, 453, 415).

4. L'amortisseur hydraulique (1) selon l'une quelconque des revendications 1 à 3, dans lequel l'ensemble soupape de compression (46) est disposé sur un côté dudit deuxième élément de séparation (44) proche de la chambre de détente (11) et se présente sous la forme d'au moins un disque déflecteur ou flottant (462) couvrant les sorties d'un ou de plusieurs cinquièmes canaux axiaux (461) dans ledit deuxième élément de séparation (44), qui sont situés radialement à proximité desdits deuxièmes canaux axiaux (443) dudit deuxième clapet antiretour (441).

5. L'amortisseur hydraulique (1) selon l'une quelconque des revendications 1 à 4, dans lequel l'ensemble soupape de détente (47) est disposé sur un côté dudit troisième élément de séparation (45) se trouvant à proximité de la chambre de compression (12) et se présente sous la forme d'au moins un disque déflecteur ou flottant (472) couvrant les sorties d'un ou de plusieurs sixièmes canaux axiaux (471) dans ledit troisième élément de séparation (45), qui sont situés radialement à proximité desdits troisièmes canaux axiaux (453) dudit troisième clapet antiretour (451).

6. L'amortisseur hydraulique (1) selon l'une quelconque des revendications 3 à 5, dans lequel le(s) disque(s) de l'ensemble soupape de compression (46) et/ou le(s) disque(s) (472) de l'ensemble soupape de détente (47) et/ou le(s) disque(s) (457) dudit au moins un desdits clapets antiretour (417) sont sollicités par un ressort (474, 458).

7. L'amortisseur hydraulique (1) selon l'une quelconque des revendications 1 à 6, dans lequel ladite troisième chambre interne (413) est commune aux courses de compression et de détente de l'amortisseur hydraulique (1).

8. L'amortisseur hydraulique (1) selon l'une des revendications 1 à 7, dans lequel ledit boîtier (41) se présente sous la forme d'un élément en forme de manchon.

9. L'amortisseur hydraulique (1) selon l'une quelconque des revendications 1 à 8, dans lequel au moins l'un desdits premier élément de séparation (43), deuxième élément de séparation (44) et troisième éléments de séparation (45) est réalisé intégralement avec le boîtier (41).

10. L'amortisseur hydraulique (1) selon l'une quelconque des revendications 1 à 9, dans lequel ledit premier élément de séparation (43) comprend un tube d'entrée (433) définissant ladite première ouverture axiale (432) et ladite deuxième ouverture axiale (442) est disposée autour dudit tube d'entrée (433).

11. L'amortisseur hydraulique (1) selon l'une quelconque des revendications 1 à 10, dans lequel l'électrovanne contrôlable (42) comporte un élément de soupape (422) disposé à l'intérieur de la première chambre interne (411) qui vient en butée contre le premier élément de séparation (43).

12. L'amortisseur hydraulique (1) selon l'une des revendications 1 à 11, dans lequel l'amortisseur hydraulique (1) est un amortisseur bitube ou monotube.

13. L'amortisseur hydraulique (1) selon l'une des revendications 1 à 12, dans lequel l'amortisseur hydraulique (1) est un amortisseur de suspension de véhicule automobile.
